# EUROPEAN PATENT SPECIFICATION

(11) **EP 2 341 762 B1**
(45) Date of publication and mention of the grant of the patent: **03.05.2017**
(21) Application number: 10250992.4
(22) Date of filing: 27.05.2010
(51) Int. Cl.: H05B 37/02, G08G 1/00, H05B 37/03

(54) **Lighting control system**
Beleuchtungssteuerungssystem
Système de contrôle de l'éclairage

(30) Priority: 30.12.2009 KR 20090134443
(43) Date of publication of application: 06.07.2011
(73) Proprietor: Samsung Electronics Co., Ltd., Suwon-si, Gyeonggi-do, 443-742 (KR)
(72) Inventor: Oh, Tae Keun, Gyunggi-do (KR); Kim, Tae Eung, Gyunggi-do (KR); Yun, Sang Kyeong, Gyunggi-do (KR); Lee, Dong Won, Gyunggi-do (KR); Jung, Yong Min, Gyunggi-do (KR); Yang, Haeng Seok, Gyunggi-do (KR)
(74) Representative: Grünecker Patent- und Rechtsanwälte PartG mbB

(56) References cited:
- EP-A2- 0 470 034
- WO-A1-2007/003038
- WO-A2-2009/017353
- US-A1- 2007 057 807
- US-A1- 2008 054 821
- US-A1- 2009 229 190

## Description

### BACKGROUND OF THE INVENTION

### Field of the Invention

The present invention relates to a lighting control system which is applicable to a lighting system in a port or the like, and more particularly, to a lighting control system which is capable of controlling the lighting for each position and for each area of the position in a fixed place such as a port and is capable of monitoring a lighting state and a control state.

### Description of the Related Art

In general, a port lighting system provides a necessary lighting when loading and unloading is performed after a ship enters a port at night or when cargo loading is performed before a ship leaves a port.

Such a conventional port lighting system uses halogen or sodium lamps. In the conventional port lighting system, lighting components are manually turned on or off at the corresponding position, when the lighting is required.

When loading and unloading or shipping is continued for a predetermined time or when a ship enters or leaves a port, the lighting is maintained in the on state for a predetermined time.

However, since the lighting components are manually turned on or off in such a conventional port lighting system, the power consumption increases, and the lighting components are difficult to effectively control and manage.

### SUMMARY OF THE INVENTION

An aspect of the present invention provides a lighting control system which is capable of controlling the lighting for each position and for each area of the position in a fixed place such as a port and is capable of monitoring a lighting state and a control state.

According to an aspect of the present invention, there is provided a lighting control system including: a management system performing lighting control for each position and for each area of the position; a main control unit including a plurality of first to n-th main controllers which control the lighting for each position in accordance with the lighting control of the management system; a lighting control unit including a plurality of first to m-th lighting controllers which control the lighting for each area of a preset corresponding position in accordance with control of the first to n-th main controllers; and a lighting unit including a plurality of lamps which are divided for each position and for each area of the position and which are operated in accordance with control of the first to m-th lighting controllers.

The management system may request the main control unit to transmit data including lighting states and control states of the lamps for each area of the preset corresponding position, and receive the data to display on a screen.

The management system may include a gateway, a control server, and a user terminal. The gateway may scan a command from the control server, perform a lighting control corresponding to the command into the main control unit, and transfer data transmitted from the main control unit to the control server, the data containing lighting states and control states of the lamps for each area of the preset position. The control server may scan a command from the user terminal, perform a lighting control corresponding to the command into the gateway, and transfer the data from the gateway to the user terminal. The user terminal may scan a command inputted by a user, perform a lighting control corresponding to the command into the control server, receive the data from the control server, store the received data, and output the data on a screen.

Each of the first to n-th main controllers may control the first to m-th lighting controllers which are divided for each position to control a plurality of lamps for each area of the position, collect lighting states from the first to m-th lighting controllers, store the collected lighting states, and transmit data containing the lighting states in accordance with a request of the management system.

Each of the first to m-th lighting controllers may be implemented as a pulse width modulation (PWM) controller controlling the turn-on/off and brightness of a plurality of lamps which are divided for each area of the preset corresponding position and included in the area.

Each of the first to m-th lighting controllers may control the plurality of lamps divided for each area of the preset corresponding position in accordance with control of the corresponding main controller among the first to n-th main controllers, and transmit data containing the lighting states of the plurality of lamps divided for each area of the preset corresponding position in response to a request from the corresponding main controller among the first to n-th main controllers.

The lighting unit includes a plurality of lamps which are controlled by the corresponding main controller among the first to m-th lighting controllers.

The lighting control system may further include a monitoring camera which transmits an image signal to the control server, the image signal being obtained by photographing an image of the preset position.

The control server may store the image signal from the monitoring camera and transmit the image signal to the user terminal in response to a request from the user terminal.

The user terminal may transfer a lighting control signal to the control server in accordance with a preset scheduler.

The scheduler of the user terminal may include a time scheduler which controls lighting depending on seasons, dates, and times.

The scheduler of the user terminal may control lighting depending on weather conditions.

The scheduler of the user terminal may control lighting depending on the brightness of the preset corresponding position, which is checked through the monitoring camera.

The control server may be connected to a port administration system to receive the latest data, compare the received data with existing data, receive schedule information when it is determined that the received data is new data, and control lighting for each area of the corresponding position on the basis of the schedule information.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a configuration diagram of a lighting control system according to an embodiment of the present invention;
FIG. 2 is an operation flow chart of a gateway according to the embodiment of the present invention;
FIG. 3 is an operation flow chart of a control server according to the embodiment of the present invention;
FIG. 4 is an operation flow chart of a user terminal according to the embodiment of the present invention;
FIG. 5 is an operation flow chart of a main control unit according to the embodiment of the present invention;
FIG. 6 is a signal format diagram of the main control unit according to the embodiment of the present invention; and
FIG. 7 is a lighting control flow chart in accordance with a schedule of a control server according to the embodiment of the present invention.

### DETAILED DESCRIPTION OF THE PREFERRED EMBODIMENT

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the thicknesses of layers and regions may be exaggerated for clarity. Like reference numerals in the drawings denote like elements, and thus their description will be omitted.

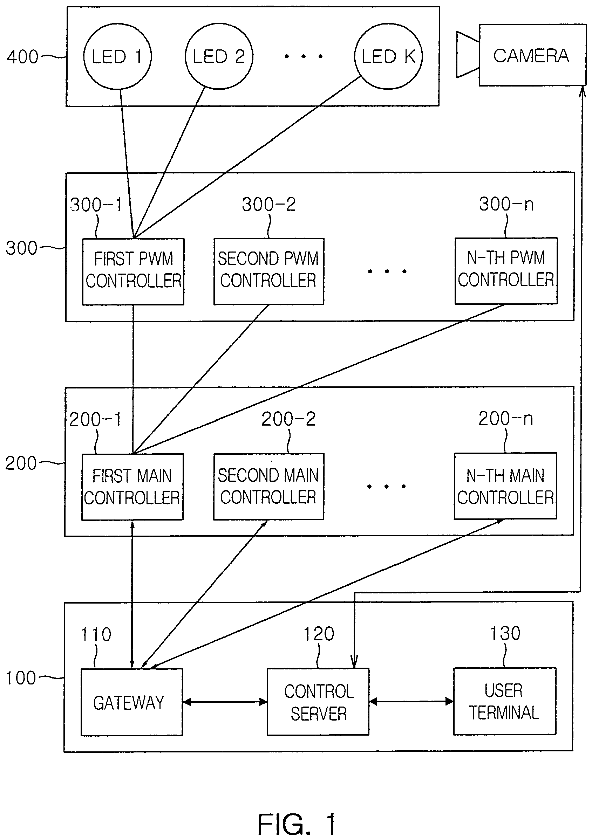

FIG. 1 is a configuration diagram of a lighting control system according to an embodiment of the present invention.

Referring to FIG. 1, the lighting control system according to the embodiment of the present invention may include a management system 100, a main control unit 200, a lighting control unit 300, and a lighting unit 400. The management system 100 performs a lighting control for each position and for each area of the position. The main control unit 200 includes a plurality of first to n-th main controllers 200-1 to 200-n which control the lighting for each position in accordance with the lighting control of the management system 100. The lighting control unit 300 includes a plurality of first to m-th lighting controllers 300-1 to 300-m which control the lighting for each area of a preset corresponding position in accordance with the control of the first to n-th main controllers 200-1 to 200-n. The lighting unit 400 includes a plurality of lamps LED1 to LEDK which are divided for each position and for each area of the position and which are operated in accordance with control of the first to m-th lighting controllers.

The management system 100 may request that the main control unit 20 transmit data including lighting states and control states of lamps for each area of the preset corresponding position, and receive the data to display on a screen.

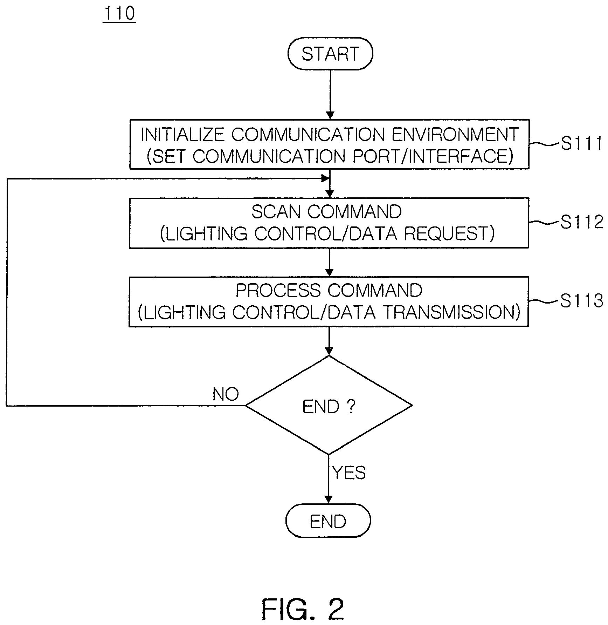

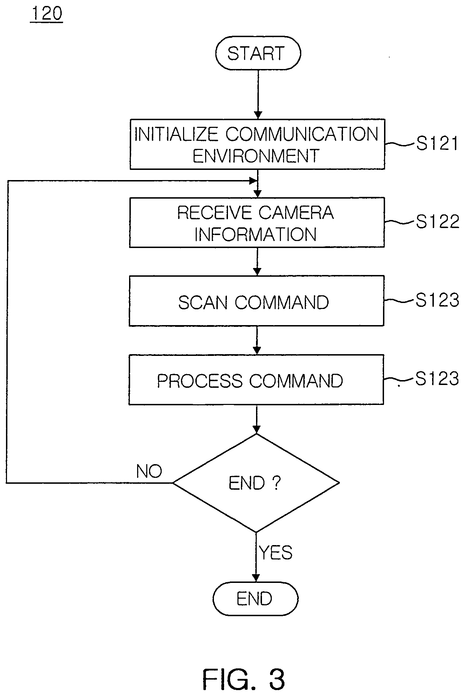

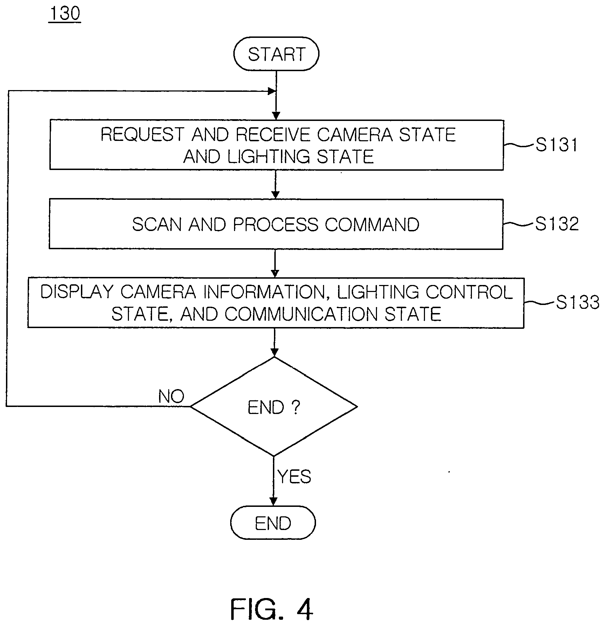

FIG. 2 is an operation flow chart of a gateway according to the embodiment of the present invention. FIG. 3 is an operation flow chart of a control server according to the embodiment of the present invention. FIG. 4 is an operation flow chart of a user terminal according to the embodiment of the present invention.

Referring to FIG. 1, the management system 100 may include a gateway 110, a control server 120, and a user terminal 130.

Referring to FIG. 2, the gateway 110 may scan a command from the control server 120 and perform a lighting control corresponding to the command into the main control unit 200. Furthermore, the gateway 110 may transfer the data transferred from the main control unit 200 to the control server 120, the data including the lighting and control states of the lamps for each area of the preset position.

Referring to FIG. 3, the control server 120 may scan a command from the user terminal 130 and perform lighting control corresponding to the command input into the gateway 110. Furthermore, the control server 120 may transfer the data transferred from the gateway 110 to the user terminal 130.

Referring to FIG. 4, the user terminal 130 may scan a command inputted by a user and perform a lighting control corresponding to the command input into the control server 120. Furthermore, the user terminal 130 may receive the data from the control server 120, store the data, and display the data on a screen.

Each of the first to m-th lighting controllers 300-1 to 300-m may be implemented as a pulse width modulation (PWM) controller capable of controlling the turn-on/off and brightness of a plurality of lamps which are divided for each area of the preset corresponding position and included in the area.

In particular, each of the first to m-th lighting controllers 300-1 to 300-m controls the operations of the plurality of lamps divided for each area of the preset corresponding position in accordance with control of the corresponding main controller among the first to n-th main controllers 200-1 to 200-n, and transmits data including the lighting states of the plurality of lamps divided for each area of the preset corresponding position, in response to a request from the corresponding main controller among the first to n-th main controllers 200-1 to 200-n.

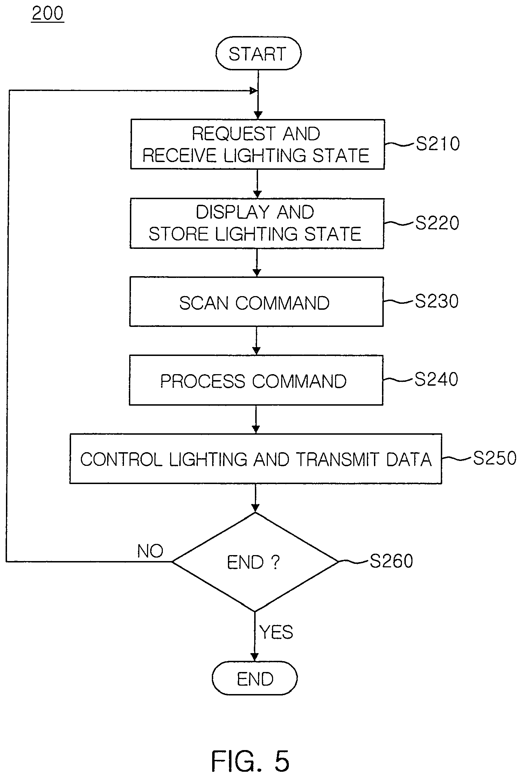

FIG. 5 is an operation flow chart of the main control unit according to the embodiment of the present invention.

Referring to FIG. 5, the main control unit 200 may be configured to collect the lighting states from the first to m-th lighting controllers 300-1 to 300-m, respectively, store the lighting states, control the lighting for each position in accordance with the lighting control of the management system 100, and transfer the data including the lighting states and the control states to the management system 100.

Each of the first to n-th main controllers 200-1 to 200-n, which are divided for each position to control a plurality of lamps, may be configured to control the plurality of first to m-th lighting controllers 300-1 to 300-m such that lighting is controlled for each area of the position, collect the lighting states from the first to m-th lighting controllers 300-1 to 300-m, respectively, store the collected lighting states, and transfer data, including the lighting states, in response to a request from the management system 100.

The lighting unit 400 may include a plurality of lamps which are controlled by the corresponding lighting controller among the first to m-th lighting controllers 300-1 to 300-m.

Meanwhile, the lighting control system according to the embodiment of the present invention may further include a monitoring camera 500 which transmits an image signal to the control server 120, the image signal being obtained by photographing an image of the preset position.

At this time, the control server 120 may store the image signal transmitted from the monitoring camera 500 and transmit the image signal to the user terminal 130 in response to a request from the user terminal 130.

The user terminal 130 may be configured to transfer a lighting control signal to the control server 120 in accordance with a preset scheduler.

The scheduler of the user terminal 130 may be implemented as a time scheduler which controls lighting depending on seasons, dates, and times. Furthermore, the scheduler of the user terminal 130 may be configured to control lighting depending on weather conditions. Furthermore, the scheduler of the user terminal 130 may be configured to control lighting depending on the brightness of the lighting at the corresponding position, which is checked through the monitoring camera 500.

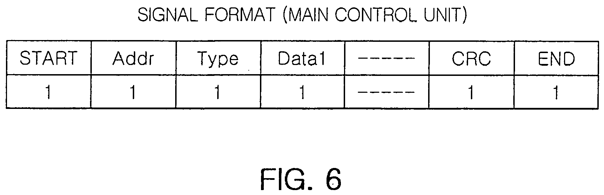

FIG. 6 is a signal format diagram of the main control unit according to the embodiment of the present invention.

In FIG. 6, the signal format of the main control unit may include a start section START indicating the start of a signal, an address section Addr indicating the address of a lighting controller, a type section Type indicating the type of a command, a data section Data1 including actual data, a CRC section CRC indicating CRC error information, and an end section END indicating the end of the signal.

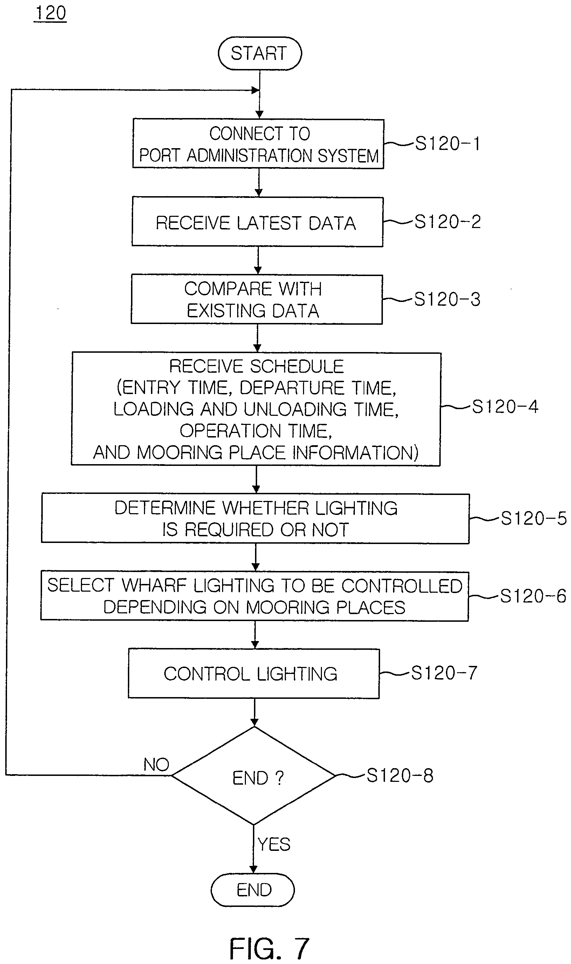

FIG. 7 is a lighting control flow chart in accordance with a schedule of the control server according to the embodiment of the present invention.

Referring to FIG. 7, the control server 120 may be configured to receive the latest data from a port administration system and control the lighting for each area of the corresponding position in accordance with a time schedule included in the received data.

Hereinafter, the operation and effect of the lighting control system according to the embodiment of the present invention will be described in detail with reference to the accompanying drawings.

Referring to FIG. 1, the management system 100 of the lighting control system according to the embodiment of the present invention transfers a command for controlling the lighting unit 400 to the main control unit 200, the lighting unit 400 including a plurality of lamps which are divided for each position and for each area of the position.

The main control unit 200 includes the plurality of first to n-th main controllers 200-1 to 200-n to control the plurality of lamps for each position.

Each of the first to n-th main controllers 200-1 to 200-n is operated in accordance with the lighting control of the management system 100 for each position, and transfers a control signal for controlling a plurality of lamps of the lighting unit 400 for each area of the corresponding position to the lighting control unit 300.

The lighting control unit 300 includes the plurality of first to m-th lighting controllers 300-1 to 300-m which are operated in accordance with the lighting control of the corresponding main controller among the first to n-th main controllers 200-1 to 200-n for each area.

Each of the first to m-th lighting controllers 300-1 to 300-m may control the lighting for each area of the preset corresponding position.

Accordingly, since the plurality of lamps of the lighting unit 400 are controlled for each position and for each area of the position, lamps included in an area of a selected position may be selectively controlled. Therefore, it is possible to provide lighting for each area of a position in which the lighting is required.

The management system 100 may request the main control unit 200 to transmit data including the lighting and control states of lamps for each area of the preset corresponding area, and receive the data to display on a screen.

Referring to FIG. 1, the management system 100 may include the gateway 110, the control server 120, and the user terminal. Referring to FIG. 2, the gateway 110 initializes a communication environment (S111), scans a command from the control server 120 (S112), and performs an operation corresponding to the command from the control server 120 (S113). That is, the management system 100 may scan a command from the control server 120, perform a lighting control corresponding to the command into the main control unit 200, and transfer the data transferred from the main control unit 200 to the control server 120, the data including the lighting and control states of lamps for each area of the preset corresponding position.

In the operation of initializing the communication environment, communication ports may be checked and communication interfaces may be set to set a wired or wireless communication environment.

Referring to FIG. 3, the control server 120 initializes a communication environment (S121), scans a command from the user terminal 130 (S122), and performs an operation corresponding to the command from the user terminal 130 (S123). That is, the control server 120 may transfer a control signal from the user terminal 130 to the gateway 110, and transfer the data from the gateway 100 to the user terminal 130 in response to a request of the user terminal 130.

Referring to FIG. 4, the user terminal 130 may receive the data from the control server 120 and store the received data. At this time, the data may include the state of the camera and the lighting state information (S131).

In this case, the camera 500 may be used to control the lighting of the corresponding position, and the image of the corresponding position may be outputted on a screen.

Next, the user terminal 130 scans and processes a command inputted from a user. That is, the user terminal 130 may transmit a lighting control signal corresponding to the command inputted by the user to the control server 120 (S132).

Furthermore, the user terminal 130 may receive the data from the control server 120 to display the camera information, the lighting control state, and the communication state (S133) .

Each of the first to m-th lighting controllers 300-1 to 300-m may be implemented as a PWM controller. In this case, each of the first to m-th lighting controllers 300-1 to 300-m may control the turn-on/off and brightness of a plurality of lamps which are divided for each area of the preset corresponding position and included in the area, through a PWM scheme.

In particular, each of the first to m-th lighting controllers 300-1 to 300-m may control the plurality of lamps divided for each area of the preset corresponding position in accordance with the control of the corresponding main controller among the first to n-th main controllers 200-1 to 200-n, and transmit data including the lighting states of the plurality of lamps divided for each area of the preset corresponding position, in response to a request from the corresponding main controller among the first to n-th main controllers 200-1 to 200-n.

Referring to FIG. 5, the main control unit 200 collects the lighting states from the first to m-th lighting controllers 300-1 to 300-m, respectively, and stores the collected lighting states (S210 and S220).

Next, the main control unit 200 scans a command from the management system 100 (S230), and performs an operation corresponding to the command from the management system 100 (S240). That is, the main control unit 200 may control the lighting for each position in accordance with the lighting control of the management system 100.

Then, the main control unit 200 may transmit the data including the lighting and control states to the management system 100 (S250 and S260).

Each of the first to n-th main controllers 200-1 to 200-n may control the plurality of first to m-th lighting controllers 300-1 to 300-m which are divided for each position to control a plurality of lamps for each area of the position, collect the lighting states from the first to m-th lighting controllers 300-1 to 300-m, store the collected lighting states, and transmit the data including the lighting states in response to a request from the management system 100.

At this time, when using the signal form as shown in FIG. 6, the main control unit 200 according to the embodiment of the present invention may control the corresponding lighting controller with precision. The signal shown in FIG. 6 may include a start section START indicating the start of the signal, an address section Addr indicating the address of a lighting controller, a type section Type indicating the type of a command, a data section Data1 including actual data, a CRC section CRC indicating CRC error information, and an end section END indicating the end of the signal.

The lighting control system according to the embodiment of the present invention may further include the monitoring camera 500 which transmits an image signal to the control server 120, the image signal being obtained by photographing an image of the preset position. In this case, the control server 120 may store the image signal from the monitoring camera 500, and transmit the image signal to the user terminal 130 in response to a request from the user terminal 130.

Meanwhile, the user terminal 130 may a lighting control signal to the control server 120 in accordance with a preset scheduler. For example, the scheduler of the user terminal 130 may be implemented as a time scheduler which controls lighting depending on seasons, dates, and times.

Furthermore, the scheduler of the user terminal 130 may be configured to control lighting depending on weather conditions. Furthermore, the scheduler of the user terminal 130 may be configured to control lighting depending on the brightness of the lighting at the corresponding position, which is checked through the monitoring camera 500.

The above-described lighting control system according to the embodiment of the present invention may control the lighting for each position. Furthermore, a plurality of lamps included in each position may be controlled in more detail for each area of the position. Therefore, it is possible to provide an environment in which lighting may be controlled in accordance with a preset scheduler in which lighting control is previously set depending on times.

The lighting control system according to the embodiment of the present invention may be applied to places such as ports, airports, and freight terminals, in which lighting needs to be controlled depending on times or operations. In this case, the lighting can be controlled for each area of each position in accordance with the above-described scheduler.

Referring to FIG. 7, the control server 120 is connected to a port administration system to receive the latest data (S120-1 and S120-2), and compares the received data with existing data. When it is determined that the received data is new data, the control server 120 receives schedule information (S120-3 and S120-4).

At this time, the schedule information may include an entry time, a departure time, a loading and unloading time, an operation time, mooring place information and so on.

Next, the control server 120 determines whether lighting is required or not, based on the schedule information (S120-5), select a wharf lighting which is to be controlled depending on mooring places (S120-6), and performs a lighting control on the selected wharf lighting (S120-7 and S120-8).

In the lighting control system according to the embodiment of the present invention, when a PWM controller is used as the lighting controller, more intelligent control may be achieved. Furthermore, the lighting control system may confirm the operation instructions and states of the respective lamps, and may be connected to an Ethernet and wireless communication through the gateway such that the user terminal directly checks the control and lighting states. Accordingly, a user may control lighting in indoor and outdoor environments.

According to the embodiment of the present invention, lighting may be controlled for each area of each position in a fixed place such as a port, and the lighting and control states may be monitored.

While the present invention has been shown and described in connection with the exemplary embodiments, it will be apparent to those skilled in the art that modifications and variations can be made without departing from the scope of the invention as defined by the appended claims.

## Claims

1. A lighting control system comprising:
a management system (100) performing a lighting control for each position and for each area of the position, and including a gateway (110), a control server (110), and a user terminal (130);
a main control unit (200) comprising a plurality of first to n-th main controllers (200-1, 200-2, 200-n), each main controller controls a lighting controller (300-1, 300-2, 300-n) for each position in accordance with the lighting control of the management system(100);
a lighting control unit (300) comprising a plurality of first to m-th lighting controllers (300-1, 300-2, 300-n), each lighting controller controls a lighting unit (400) for lighting for each area of a preset corresponding position in accordance with control of the first to n-th main controllers (200-1, 200-2, 200-n);
a lighting unit (400) comprising a plurality of lamps which are divided for each position and for each area of the position and which are operated in accordance with control of the first to m-th lighting controllers (300-1, 300-2, 300-n), and
a monitoring camera which transmits an image signal to the control server (120), the image signal being obtained by photographing an image of the preset position,
wherein the user terminal (130) controls lighting depending on the brightness of the preset corresponding position, which is checked through the monitoring camera.

2. The lighting control system of claim 1, wherein the management system (100) requests the main control unit (200) to transmit data comprising lighting states and control states of the lamps for each area of the preset corresponding position, and receives the data to display on a screen.

3. The lighting control system of claim 1, wherein the gateway (110) scans a command from the control server (120), performs a lighting control corresponding to the command into the main control unit (200), and transfers data transmitted from the main control unit (200) to the control server (120), the data containing lighting states and control states of the lamps for each area of the preset position,
the control server (120) scans a command from the user terminal (130), performs a lighting control corresponding to the command into the gateway (110), and transfers the data from the gateway (110) to the user terminal, and
the user terminal (130) scans a command inputted by a user, performs a lighting control corresponding to the command into the control server (120), receives the data from the control server (120), stores the received data, and outputs the data on a screen.

4. The lighting control system of claim 3, wherein each of the first to n-th main controllers (200-1, 200-2, 200-n) controls the first to m-th lighting controllers (300-1, 300-2, 300-n) which are divided for each position to control a plurality of lamps for each area of the position, collects lighting states from the first to m-th lighting controllers, stores the collected lighting states, and transmits data containing the lighting states in accordance with a request of the management system (100).

5. The lighting control system of claim 4, wherein each of the first to m-th lighting controllers (300-1, 300-2, 300-n) is implemented as a pulse width modulation, PWM, controller controlling the turn-on/off and brightness of a plurality of lamps which are divided for each area of the preset corresponding position and included in the area.

6. The lighting control system of claim 5, wherein each of the first to m-th lighting controllers (300-1, 300-2, 300-n) controls the plurality of lamps divided for each area of the preset corresponding position in accordance with control of the corresponding main controller among the first to n-th main controllers (200-1, 200-2, 200-n), and transmits data containing the lighting states of the plurality of lamps divided for each area of the preset corresponding position in response to a request from the corresponding main controller among the first to n-th main controllers.

7. The lighting control system of claim 6, wherein the plurality of lamps are controlled by the corresponding main controller among the first to m-th lighting controllers (200-1, 200-2, 200-n).

8. The lighting control system of claim 1, wherein the control server (120) stores the image signal from the monitoring camera and transmits the image signal to the user terminal (130) in response to a request from the user terminal (130).

9. The lighting control system of claim 7, wherein the user terminal (130) transfers a lighting control signal to the control server (120) in accordance with a preset scheduler.

10. The lighting control system of claim 9, wherein the scheduler of the user terminal (130) comprises a time scheduler which controls lighting depending on seasons, dates, and times.

11. The lighting control system of claim 10, wherein the scheduler of the user terminal (130) controls lighting depending on weather conditions.

12. The lighting control system of claim 9, wherein the control server (120) is connected to a port administration system to receive the latest data, compares the received data with existing data, receives schedule information when it is determined that the received data is new data, and controls lighting for each area of the corresponding position on the basis of the schedule information.

## Patentansprüche

1. Beleuchtungssteuersystem, umfassend:
ein Verwaltungssystem (100), das eine Beleuchtungssteuerung für jede Position und für jeden Bereich der Position durchführt und ein Gateway (110), einen Steuerserver (110) und ein Benutzerendgerät (130) umfasst,
eine Hauptsteuereinheit (200), die eine Vielzahl von ersten bis n-ten Hauptsteuereinrichtungen (200-1, 200-2, 200-n) umfasst, wobei jede Hauptsteuereinrichtung eine Beleuchtungssteuereinrichtung (300-1, 300-2, 300-n) für jede Position gemäß der Beleuchtungssteuerung des Verwaltungssystems (100) steuert,
eine Beleuchtungssteuereinheit (300), die eine Vielzahl von ersten bis m-ten Beleuchtungssteuereinrichtungen (300-1, 300-2, 300-n) umfasst, wobei jede Beleuchtungssteuereinrichtung eine Beleuchtungseinheit (400) für das Beleuchten jedes Bereichs einer vorgegebenen entsprechenden Position gemäß der Steuerung der ersten bis n-ten Hauptsteuereinrichtungen (200-1, 200-2, 200-n) steuert,
eine Beleuchtungseinheit (400), die eine Vielzahl von Leuchten umfasst, die für jede Position und für jeden Bereich der Position unterteilt sind und die gemäß der Steuerung der ersten bis m-ten Beleuchtungssteuereinrichtungen (300-1, 300-2, 300-n) betrieben werden, und
eine Überwachungskamera, die ein Bildsignal an den Steuerserver (120) sendet, wobei das Bildsignal durch das Fotografieren eines Bilds der vorgegebenen Position erhalten wird, wobei das Benutzerendgerät (130) die Beleuchtung in Abhängigkeit von der Helligkeit der vorgegebenen entsprechenden Position, die durch die Überwachungskamera geprüft wird, steuert.

2. Beleuchtungssteuersystem nach Anspruch 1, wobei das Verwaltungssystem (100) die Hauptsteuereinheit (200) auffordert, Daten, die Beleuchtungszustände und Steuerzustände der Leuchten für jeden Bereich der vorgegebenen entsprechenden Position enthalten, zu senden, und die Daten für eine Anzeige an einem Bildschirm empfängt.

3. Beleuchtungssteuersystem nach Anspruch 1, wobei:
das Gateway (110) einen Befehl von dem Steuerserver (120) abtastet, eine Beleuchtungssteuerung gemäß dem Befehl in die Hauptsteuereinheit (200) durchführt und von der Hauptsteuereinheit (200) gesendete Daten zu dem Steuerserver (120) überträgt, wobei die Daten Beleuchtungszustände und Steuerzustände der Leuchten für jeden Bereich der vorgegebenen Position enthalten,
der Steuerserver (120) einen Befehl von dem Benutzerendgerät (130) abtastet, eine Beleuchtungssteuerung gemäß dem Befehl in den Gateway (110) durchführt und die Daten von dem Gateway (110) zu dem Benutzerendgerät überträgt, und
das Benutzerendgerät (130) einen durch einen Benutzer eingegebenen Befehl abtastet, eine Beleuchtungssteuerung in Entsprechung zu dem Befehl in den Steuerserver (120) durchführt, die Daten von dem Steuerserver (120) empfängt, die empfangenen Daten speichert und die Daten auf einem Bildschirm ausgibt.

4. Beleuchtungssteuersystem nach Anspruch 3, wobei jede der ersten bis n-ten Hauptsteuereinrichtungen (200-1, 200-2, 200-n) die ersten bis m-ten Beleuchtungssteuereinrichtungen (300-1, 300-2, 300-n), die für jede Position unterteilt sind, steuert, um eine Vielzahl von Leuchten für jeden Bereich der Position zu steuern, die Beleuchtungszustände von den ersten bis m-ten Beleuchtungssteuereinrichtungen sammelt, die gesammelten Beleuchtungszustände speichert und Daten, die die Beleuchtungszustände enthalten, gemäß einer Anfrage des Verwaltungssystems (100) sendet.

5. Beleuchtungssteuersystem nach Anspruch 4, wobei jede der ersten bis m-ten Beleuchtungssteuereinrichtungen (300-1, 300-2, 300-n) als eine Pulsbreitenmodulation (PWM)-Steuereinrichtung implementiert ist, die das Ein-/Ausschalten und die Helligkeit einer Vielzahl von Leuchten, die für jeden Bereich der vorgegebenen entsprechenden Position unterteilt sind und in dem Bereich enthalten sind, steuern.

6. Beleuchtungssteuersystem nach Anspruch 5, wobei jede der ersten bis m-ten Beleuchtungssteuereinrichtungen (300-1, 300-2, 300-n) die Vielzahl von Leuchten, die für jeden Bereich der vorgegebenen entsprechenden Position unterteilt sind, gemäß der Steuerung der entsprechenden Hauptsteuereinrichtung aus den ersten bis n-ten Hauptsteuereinrichtungen (200-1, 200-2, 200-n) steuert und Daten, die die Beleuchtungszustände der Vielzahl von Leuchten, die für jeden Bereich der vorgegebenen entsprechenden Position unterteilt sind, enthalten, in Reaktion auf eine Anfrage von der entsprechenden Hauptsteuereinrichtung aus den ersten bis n-ten Hauptsteuereinrichtungen sendet.

7. Beleuchtungssteuersystem nach Anspruch 6, wobei die Vielzahl von Leuchten durch die entsprechende Hauptsteuereinrichtung aus den ersten bis m-ten Beleuchtungssteuereinrichtungen (200-1, 200-2, 200-n) gesteuert werden.

8. Beleuchtungssteuersystem nach Anspruch 1, wobei der Steuerserver (120) das Bildsignal von der Überwachungskamera speichert und das Bildsignal an das Benutzerendgerät (130) in Reaktion auf eine Anfrage von dem Benutzerendgerät (130) sendet.

9. Beleuchtungssteuersystem nach Anspruch 7, wobei das Benutzerendgerät (130) ein Beleuchtungssteuersignal an den Steuerserver (120) gemäß einem vorgegebenen Planer überträgt.

10. Beleuchtungssteuersystem nach Anspruch 9, wobei der Planer des Benutzerendgeräts (130) einen Zeitplaner umfasst, der die Beleuchtung abhängig von Jahreszeiten, Tagen und Uhrzeiten steuert.

11. Beleuchtungssteuersystem nach Anspruch 10, wobei der Planer des Benutzerendgeräts (130) die Beleuchtung abhängig von Wetterbedingungen steuert.

12. Beleuchtungssteuersystem nach Anspruch 9, wobei der Steuerserver (120) mit einem Portadministrationssystem verbunden ist, um die jüngsten Daten zu empfangen, die empfangenen Daten mit vorhandenen Daten vergleicht, Planungsinformationen empfängt, wenn bestimmt wird, dass die empfangenen Daten neue Daten sind, und die Beleuchtung für jeden Bereich der entsprechenden Position basierend auf den Planungsinformationen steuert.

## Revendications

1. Système de commande d'éclairage comprenant :
un système de gestion (100) exécutant une commande d'éclairage pour chaque position et pour chaque zone de la position et incluant une passerelle (110), un serveur de commande (110) et un terminal d'utilisateur (130) ;
une unité de commande principale (200) comprenant une pluralité de première à n^{ième} commandes principales (200-1, 200-2, 200-n), chaque commande principale commandant une commande d'éclairage (300-1, 300-2, 300-n) pour chaque position conformément à la commande d'éclairage du système de gestion (100) ;
une unité de commande d'éclairage (300) comprenant une pluralité de première à m^{ième} commandes d'éclairage (300-1, 300-2, 300-n), chaque commande d'éclairage commandant une unité d'éclairage (400) pour éclairer chaque zone d'une position correspondante prédéfinie conformément à la commande des première à n^{ième} commandes principales (200-1, 200-2, 200-n) ;
une unité d'éclairage (400) comprenant une pluralité de lampes séparées pour chaque position et pour chaque zone de la position et qui fonctionnent conformément à la commande des première à m^{ième} commandes d'éclairage (300-1, 300-2, 300-n), et
une caméra de surveillance qui transmet un signal d'image au serveur de commande (120), le signal d'image étant obtenu en photographiant la position prédéfinie,
où le terminal d'utilisateur (130) commande l'éclairage en fonction de la luminosité de la position correspondante prédéfinie, vérifiée à l'aide de la caméra de surveillance.

2. Système de commande d'éclairage selon la revendication 1, où le système de gestion (100) demande à l'unité de commande principale (200) de transmettre des données comprenant des états d'éclairage et des états de commande des lampes pour chaque zone de la position correspondante prédéfinie et reçoit des données à afficher sur un écran.

3. Système de commande d'éclairage selon la revendication 1, où la passerelle (110) scanne une commande du serveur de commande (120), exécute une commande d'éclairage correspondante à la commande envoyée à l'unité de commande principale (200) et transfert des données transmises par l'unité de commande principale (200) au serveur de commande (120), les données contenant des états d'éclairage et des états de commande des lampes pour chaque zone de la position prédéfinie.
le serveur de commande (120) scanne une commande provenant du terminal d'utilisateur (130), exécute une commande d'éclairage correspondant à la commande envoyée à la passerelle (110) et transfert les données de la passerelle (110) au terminal d'utilisateur, et
le terminal d'utilisateur (130) scanne une commande saisie par un utilisateur, exécute une commande d'éclairage correspondant à la commande envoyée au serveur de commande (120), reçoit les données provenant du serveur de commande (120), stocke les données reçues et sort les données sur un écran.

4. Système de commande d'éclairage selon la revendication 3, où chacune des première à n^{ième} commandes principales (200-1, 200-2, 200-n) commande les première à m^{ième} commandes d'éclairage (300-1, 300-2, 300-n) qui sont séparées pour chaque position pour commander une pluralité de lampes pour chaque zone de la position, recueille des états d'éclairage à partir des première à m^{ième} commandes d'éclairage, stocke les états d'éclairage recueillis et transmet les données contenant les états d'éclairage conformément à une demande du système de gestion (100).

5. Système de commande d'éclairage selon la revendication 4, où chacune des première à m^{ième} commandes d'éclairage (300-1, 300-2, 300-n) est réalisée sous forme de commande à modulation de largeur d'impulsion, MLI, commandant l'allumage/l'extinction et la luminosité d'une pluralité de lampes séparées pour chaque zone de la position correspondante prédéfinie et incluses dans la zone.

6. Système de commande d'éclairage selon la revendication 5, où chacune des première à m^{ième} commandes d'éclairage (300-1, 300-2, 300-n) commande la pluralité de lampes séparées pour chaque zone de la position correspondante prédéfinie conformément à une commande de la commande principale correspondante parmi les première à n^{ième} commandes principales (200-1, 200-2, 200-n) et transmet des données contenant les états d'éclairage de la pluralité de lampes séparées pour chaque zone de la position correspondante prédéfinie en réponse à une demande de la commande principale correspondante parmi les première à n^{ième} commandes principales.

7. Système de commande d'éclairage selon la revendication 6, où la pluralité de lampes est commandée par la commande principale correspondante parmi les première à m^{ième} commandes d'éclairage (200-1, 200-2, 200-n).

8. Système de commande d'éclairage selon la revendication 1, où le serveur de commande (120) stocke le signal d'image provenant de la caméra de surveillance et transmet le signal d'image au terminal d'utilisateur (130) en réponse à une demande provenant du terminal d'utilisateur (130).

9. Système de commande d'éclairage selon la revendication 7, où le terminal d'utilisateur (130) transfert un signal de commande d'éclairage au serveur de commande (120) conformément à un planificateur préprogrammé.

10. Système de commande d'éclairage selon la revendication 9, où le planificateur du terminal d'utilisateur (130) comprend un planificateur temporel qui commande l'éclairage en fonction de la saison, de la date et de l'heure.

11. Système de commande d'éclairage selon la revendication 10, où le planificateur du terminal d'utilisateur (130) commande l'éclairage en fonction des conditions météorologiques.

12. Système de commande d'éclairage selon la revendication 9, où le serveur de commande (120) est connecté à un système d'administration de ports pour recevoir les données les plus récentes, compare les données reçues avec des données existantes, reçoit des informations de planification lorsqu'il est déterminé que les données reçues sont des nouvelles données et commande l'éclairage pour chaque zone de la position correspondante en se fondant sur les informations de planification.
